# EUROPEAN PATENT SPECIFICATION

(11) **EP 3 542 683 B1**
(45) Date of publication and mention of the grant of the patent: **16.12.2020**
(21) Application number: 18000853.4
(22) Date of filing: 31.10.2018
(51) Int. Cl.: A47J 36/02

(54) **GRILLING SET MADE OF NATURAL MATERIAL**
GRILLSET AUS NATURMATERIAL
ENSEMBLE DE GRILL FABRIQUÉ À PARTIR DE MATÉRIAU NATUREL

(30) Priority: 23.03.2018 EE 201800005 U
(43) Date of publication of application: 25.09.2019
(73) Proprietor: Woodbright OÜ, 87202 Pärnu maakond (EE)
(72) Inventor: Laks, Eva, 87202 Pärnu maakond (EE); Kruuse, Riivo, 87202 Pärnu maakond (EE)
(74) Representative: Koitel, Raivo

(56) References cited:
- JP-U- 3 159 884
- US-A- 4 786 290
- US-A- 5 535 666
- US-B2- 6 448 542

## Description

### Field of the Invention

This invention has been made in the field of cooking and grilling devices as well as the field of environmental protection, and in particular, the invention describes a grilling device and its accessories made of natural materials.

### Prior Art

The objective of the invention is the development of a grilling device made of natural materials, which would burn up completely and leave no non-degradable residues.

Woodbright OÜ's Eco-Grill (http://woodbright.eu/et/tooted/eco-grill/) is disclosed, which is a disposable wooden grilling device, wherein a cavity has been made inside an alder stump that has been filled with grilling charcoal and that is ignited using bark. The grilling device comes with a metal grilling grate. The heating-up process takes about 15-20 minutes, during which time the grilling charcoal achieves its grilling temperature. The grilling process takes about 90 minutes, and this grilling device remains ignited for about 1-2 hours. A shortcoming of this solution is that the grilling temperature is about 800 °C, which is too high for cooking meat. Another shortcoming of this solution is the metal grate, due to which the grilling device fails to burn up completely in nature. Also, it fails to provide an evenly distributed combustion, and uniform heat for grilling. Also, the frame of the grill quickly disintegrates in the flames.

Disclosed is also a disposable cooking set (KR101378612B1, Hong Gil Mong, published on March 27, 2014), which comprises a disposable cooking device, a metal cooking plate, ignition material, and an ignition device. The ignition device is a solid fuel that has been placed inside a cardboard box covered with an insulating material. A shortcoming of this solution is the metal grate, which is why the cooking set fails to burn up completely in nature.

Closest prior art to the invention is a cooking device (US5535666, Southerland Glen, published on July 16, 1996) that is meant for grilling. The cooking device includes a frame made of a wooden log with a cavity for fuel. The cavity has a base, two sidewalls, two end-walls. Each end-wall ends with a top edge, into which slots have been made. The device includes a metal grate with an edged frame, where the frame is positioned transversely in relation to the frame, and it has been adapted in such a way that it would match the slots. The cooking device is equipped with a cover made in a similar way as the frame, i.e. it has a cavity on the sidewalls and the end-walls, as well as ventilation slots on the sides of the cover. Foil has been installed at the bottom of the cavity of the cooking device to protect the wooden frame from heat/combustion. A shortcoming of this solution is that the device has a metal grate and foil covering the bottom of the cavity, which leave non-degradable residues in the nature. In addition, this cooking device is too big for carrying it along for single-time use.

### Summary of the Invention

The present grilling set made of natural materials comprises a natural wood frame, one surface of which has been substantially carved out to form a cavity for installing the ignition material, thereat leaving the sides of that surface intact from the cavity. The cavity may have a concave or flat base. The cavities have sidewalls, end-walls and a base, whereat ventilation slots have been placed on the sidewalls and/or end-walls of the cavity. On the sides of the surface, there are grooves and holes for the mounting of the means for holding of the grilling product, wherein the holders of the grilling product over the ignition material are wooden holders and wooden sticks.

The wooden holders are rectangular plates with slots along at least one longer side, and holders have been mounted in the grooves on the sides of the surface of the wooden frame in a horizontal or vertical manner. The wooden sticks are mounted inside the holes at the sides of the surface of the wooden frame at an about 45-degree angle, or the wooden sticks are mounted in the slots of the holder, wherein the holder has been mounted in the grooves in a horizontal or vertical manner.

The ignition material is a charcoal briquette burning at a low temperature and/or thermal-treated wood, and the ignition means are made of natural materials. In addition, the grilling set may include means for igniting the ignition means.

If necessary, to protect the surface of the wooden frame used for grilling (the cavity and the sides) and/or to slow down the combustion of the frame, they shall be coated with a natural protective agent (clay or salt water).

### Brief Description of the drawings

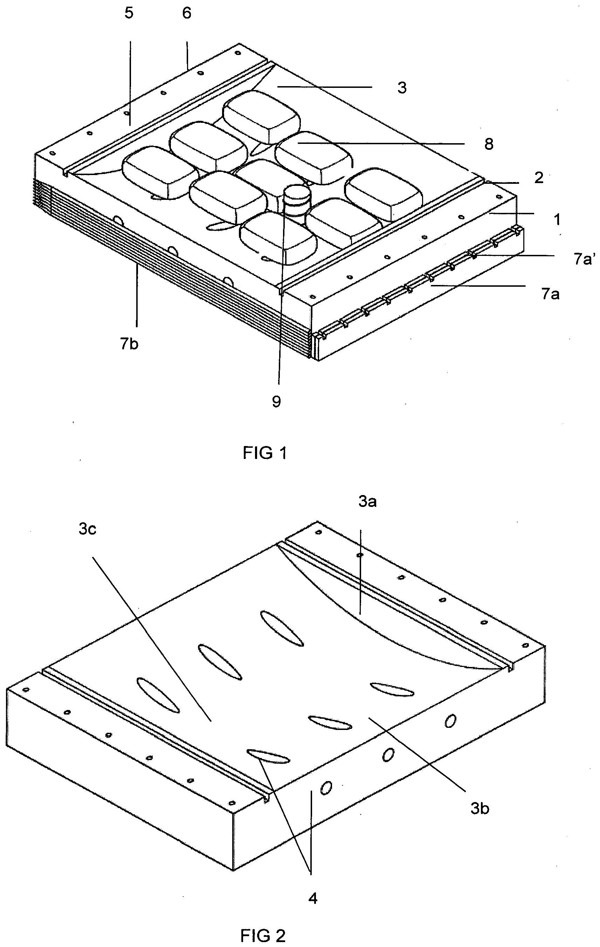

Fig. 1 depicts the grilling set made of natural materials;
Fig. 2 depicts the wooden frame of the grilling set with a circular base of the cavity;
Fig. 3 depicts the wooden frame of the grilling set with a rectangular base of the cavity;
Fig. 4 depicts the sticks being placed in the slots for the wooden holders transversely in relation to the holder, where the holder has been positioned horizontally in the slots using its longer side;
Fig. 5 depicts the sticks being placed in the slots for the wooden holders, where the holder has been positioned vertically in the slots using its shorter side;
Fig. 6 depicts the sticks being placed at an about 45-degree angle inside the holes located in the end-walls of the cavity.

### Description of an Embodiment

The described grilling set made of natural materials comprises a wooden frame 1, one surface 2 of which has been substantially carved out to form a cavity 3, thereat leaving the sides of the surface intact from the cavity. The cavity has been provided for the installation of the ignition material 8 and the ignition means 9. The cavity has sidewalls 3a, end-walls 3b and a base 3c. Ventilation slots 4 have been cut in the sidewalls 3a. On the sides of the surface, there are grooves 5 and holes 6 for the holding means 7 of the grilling product. The surface of the wooden frame that is used for grilling is preferably coated with a natural protective agent to protect it from combustion/heat.

Holders 7a and/or sticks 7b are used for positioning the food that is to be grilled above the ignition material. The holders are rectangular plates with slots 7a' made along one or both of its longer sides. The holders shall be inserted into the grooves 5 cut into the sides of the frame. There are dedicated holes 6 on the sides of the frame for the mounting of the sticks, or the sticksshall be mounted in the slots 7a' on the holders.

The frame can be manufactured from a single beam and several laminboards using wood adhesives. The height of the wooden frame is between 3 cm to 10 cm, depending on the thickness of the beam. The length of the frame is between 150 mm to 500 mm, width being between 160 mm to 420 mm. Several variations are possible - ranging from small (200x200 mm) to large (440x500 mm).

Inside one surface 2 of the frame 1, a substantial cavity 3 has been cut in such a manner that 10 to 50 mm on both longer sides of the frame 1 remain untouched from the cavity.

The base 3c of the cavity 3 may have a concaving base or a rectangular flat base. The thickness of the base of the frame 1 remains between 5 to 70 mm.

Ventilation slots 4 are located on the sidewalls 3b and/or end-walls 3a of the cavity 3 with a diameter of 5 mm to 20 mm into the cavity; the distance between the ventilation slots is 20 to 100 mm, which ensures a uniform combustion and temperature of the ignition material.

There are holes on the sides of the frame for grilling sticks spaced 10-100 mm apart with a diameter of up to 12 mm, a depth between 10-50 mm, and an angle remaining between 30 to 60 degrees.

The radius of the round cavity is between 90-260 mm. In case of a larger product, also the radius increases.

The sidewalls and end-walls of a rectangular base are tilted inward at a 35-45-degree angle. The corners of the cavity have a round radius between 10-30 mm.

To protect the surface used for grilling from combustion/heat, it is covered with a natural protective agent, preferably clay or salt water. An advantage of clay is also that it conducts heat upward, and that it provides more uniform heat for the food to be grilled during the combustion of the ignition material.

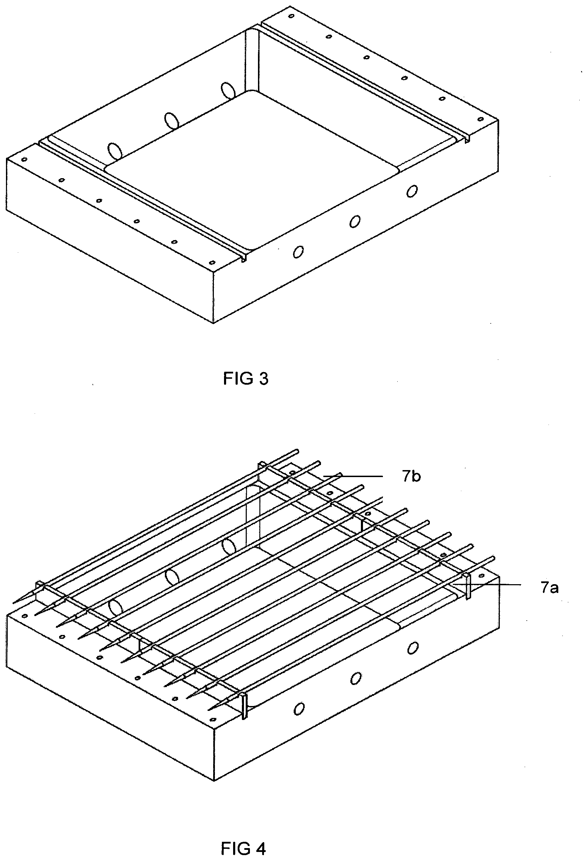

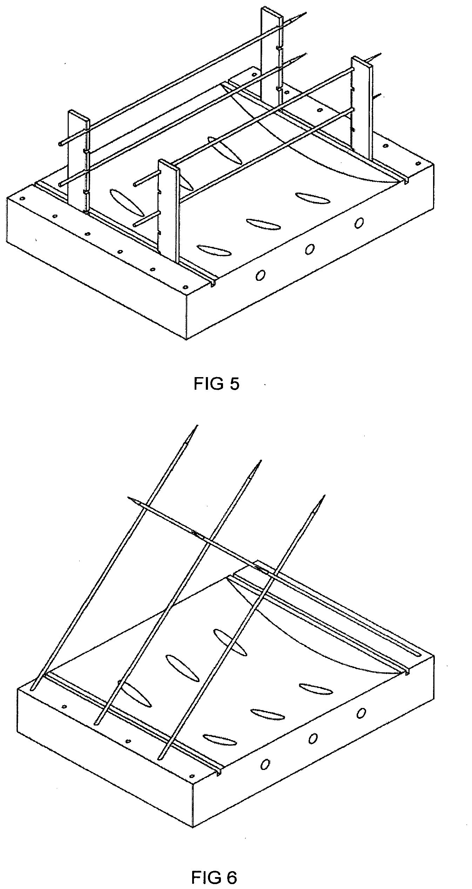

Wooden sticks can be used in various ways during grilling, thereby providing more or less heat to the grilling product:
- the sticks can be mounted into the slots on the wooden holders transversely to the holder, where the holder's longer edge has been mounted horizontally into the grooves, when the food requires more heat (Fig. 4);
- the sticks can be mounted into the slots on the wooden holders transversely and in parallel to the holder, where the holder's longer edge has been mounted horizontally into the grooves, thereby forming a grate from the sticks;
- the sticks can be mounted into the slots on the wooden holders, where the holder has been mounted into the grooves vertically to the shorter edge, when the food requires less heat (Fig. 5);
- the sticks can be mounted at an about 45-degree angle into the holes on the sides of the frame, where the food requires less heat (Fig. 6);
- several holders with slots on both longer sides can be used for mounting the holders vertically into the grooves and mounting sticks into their slots at different heights and using a different level of density; also, when the sticks are mounted in a crossed pattern, they form a grate.

Also, other stick mounting options are possible (e.g. horizontally and vertically, thereby forming a grate).

The ignition material 8 is a charcoal briquette or thermal-treated wooden chips burning at a low temperature. The charcoal briquette is made of compressed charcoal that does not burn with a flame and that ensures a uniform combustion between 450-550 °C for an hour and more to cook food in a uniform manner.

The ignition means 9 is an ignition tablet, which has been manufactured from a combustible natural material. Also, the grilling set may comprise matches for igniting the ignition material. At the same time, the ignition means can be ignited using other available means.

The grilling set is natural and it burns up completely during its use. The burn-up time of the grilling set can be postponed by covering the whole grilling set or only the surface (and the concave) used for grilling using a natural protective agent.

## Claims

1. A grilling set made of natural materials, comprising of a wooden frame with ventilation holes, having a cavity for ignition material, a means for holding the grilling product above the ignition material, an ignition material and an ignition means, wherein:
- a cavity (3) has been cut substantially into one surface (2) of the wooden frame (1), with ventilation holes (4) on the sidewalls (3a) and/or the end-wall (3b) as well as grooves (5) and holes (6) for the holding means (7) of the grilling product on the sides of the surface (2) that are left untouched from the cavity (3) cut in the frame (1);
- the holding means (7) of the grilling product over the ignition material (8) are wooden holders (7a) with slots (7a') and wooden sticks (7b);
- the ignition material (8) is a material burning at a low temperature;
- the ignition means (9) is a natural material;
- the cavity (3) and/or the surface (2) on the wooden frame is preferably coated with a natural protective agent.

2. A grilling set made of natural materials in accordance with claim 1, **characterized in that** a part of base (3c) of the cavity (3) is concave.

3. A grilling set made of natural materials in accordance with claim 1, **characterized in that** a part of base (3c) of the cavity (3) is a flat.

4. A grilling set made of natural materials in accordance with claims 1 to 3, **characterized in that** to protect the frame used for grilling against combustion/heat, the cavity (3) and/or the surface (2) have been coated with a natural protective agent.

5. A grilling set made of natural materials in accordance with claim 4, **characterized in that** the natural protective agent is clay.

6. A grilling set made of natural materials in accordance with claim 4, **characterized in that** the natural protective agent is saltwater.

7. A grilling set made of natural materials in accordance with claims 1 to 6, **characterized in that** the ignition material (8) is a charcoal briquette.

8. A grilling set made of natural materials in accordance with claims 1 to 6, **characterized in that** the ignition material (8) is thermal-treated wooden chips.

9. A grilling set made of natural materials in accordance with claims 1 to 8, **characterized in that** the wooden holders (7a) are rectangular plates, with slots (7a') made along at least one of its longer sides.

10. A grilling set made of natural materials in accordance with claims 1 to 9, **characterized in that** the set includes at least two wooden holders (7a), and that they shall be mounted into the grooves (5) on the surface (2) of the wooden frame (1) during usage.

11. A grilling set made of natural materials in accordance with claim 10, **characterized in that** the wooden holders (7a) have been mounted horizontally in the grooves (5) during usage.

12. A grilling set made of natural materials in accordance with claim 10, **characterized in that** the wooden holders (7a) have been mounted vertically in the grooves (5) during usage.

13. A grilling set made of natural materials in accordance with claims 1 to 12, **characterized in that** the wooden sticks (7b) are mounted at an about 45-degree angle into the holes (6) on the sides of the surface (2) of the wooden frame (1) during usage.

14. A grilling set made of natural materials in accordance with claims 1 to 13, **characterized in that** the wooden sticks (7b) are mounted into the slots (7a') on the wooden holders (7a) which are horizontally mounted into the groove (5).

15. A grilling set made of natural materials in accordance with claims 1 to 14, **characterized in that** the wooden sticks (7b) are mounted into the slots (7a') on the wooden holders (7a) which are vertically mounted into the groove (5).

16. A grilling set made of natural materials in accordance with claims 1 to 15, **characterized in that** the wooden sticks (7b) form a grate (8) above the ignition material.

## Patentansprüche

1. Ein Grillset aus Naturalmaterialen, das einen Holzrahmen mit Belüftungslöchern, einen Hohlraum für entzündliches Material sowie ein Hilfsmittel zum Halten des Grillprodukts über dem entzündlichen Material enthält, wobei:
- ein Hohlraum (3) markant in eine Oberfläche (2) des Holzrahmens (1) geschnitten wurde, mit Belüftungslöchern (4) an den Seitenwänden (3a) und/oder der Endwand (3b) sowie Rillen (5) und Löchern (6) für das Halte-Hilfsmittel (7) des Grillprodukts auf den Seiten der Oberfläche (2), die den Schnitt des Hohlraums (3) im Rahmen (1) nicht berühren;
- das Halte-Hilfsmittel (7) des Grillprodukts über dem entzündlichen Material (8) Holzhalterungen (7a) mit Schlitzen (7a') und Holzstäben (7b) sind;
- das entzündliche Material (8) ein Material ist, das bei niedriger Temperatur brennt;
- das entzündliche Material (9) ein Naturmaterial ist;
- der Hohlraum (3) und/oder die Oberfläche (2) auf dem Holzrahmen vorzugsweise mit einem natürlichen Schutzmittel beschichtet ist.

2. Ein Grillset aus Naturmaterialen gemäß Anspruch 1, **dadurch gekennzeichnet, dass** ein Teil des Bodens (3c) des Hohlraums (3) konkav ist.

3. Ein Grillset aus Naturmaterialien gemäß Anspruch 1, **dadurch gekennzeichnet, dass** ein Teil der Bodens (3c) des Hohlraums (3) flach ist.

4. Ein Grillset aus Naturmaterialien gemäß Anspruch 1 bis 3, **dadurch gekennzeichnet,** den Rahmen zum Grillen gegen Verbrennung/Hitze zu schützen und dass der Hohlraum (3) und/oder die Oberfläche (2) mit einem natürlichen Schutzmittel beschichte wurde.

5. Ein Grillset aus Naturmaterialien gemäß Anspruch 4, **dadurch gekennzeichnet, dass** das natürliche Schutzmittel Lehm ist.

6. Ein Grillset aus Naturmaterialien gemäß Anspruch 4, **dadurch gekennzeichnet, dass** das natürliche Schutzmittel Salzwasser ist.

7. Ein Grillset aus Naturmaterialien gemäß Anspruch 1 bis 6, **dadurch gekennzeichnet, dass** das entzündliche Material (8) ein Holzkohlenbrikett ist.

8. Ein Grillset aus Naturmaterialien gemäß Anspruch 1 bis 6, **dadurch gekennzeichnet, dass** das entzündliche Material (8) thermisch behandelte Holzschnipsel sind.

9. Ein Grillset aus Naturmaterialien gemäß Anspruch 1 bis 8, **dadurch gekennzeichnet, dass** die Holzhalterungen (7a) rechteckige Platten mit Schlitzen (7a') an mindestens einer der längeren Seiten sind.

10. Ein Grillset aus Naturmaterialien gemäß Anspruch 1 bis 9, **dadurch gekennzeichnet, dass** das Set mindestens zwei Holzhalterungen (7a) enthält und dass sie in die Rillen (5) auf der Oberfläche (2) des Holzrahmens (1) während der Verwendung angebracht werden sollen.

11. Ein Grillset aus Naturmaterialien gemäß Anspruch 10, **dadurch gekennzeichnet, dass** die Holzhalterungen (7a) horizontal in den Rillen (5) während der Verwendung befestigt wurden.

12. Ein Grillset aus Naturmaterialien gemäß Anspruch 10, **dadurch gekennzeichnet, dass** die Holzhalterungen (7a) vertikal in den Rillen (5) während der Verwendung befestigt wurden.

13. Ein Grillset aus Naturmaterialien gemäß Anspruch 1 bis 12, **dadurch gekennzeichnet, dass** die Holzstäbe (7b) ungefähr im 45-Grad-Winkel in die Löcher (6) auf den Seiten der Oberfläche (2) des Holzrahmens (1) während der Verwendung befestigt werden.

14. Ein Grillset aus Naturmaterialien gemäß Anspruch 1 bis 13, **dadurch gekennzeichnet, dass** die Holstäbe (7b) in den Schlitzen (7a') auf den Holzhalterungen (7a) befestigt werden, die horizontal in der Rille (5) befestigt werden.

15. Ein Grillset aus Naturmaterialien gemäß Anspruch 1 bis 14, **dadurch gekennzeichnet, dass** die Holzstäbe (7b) in den Schlitzen (7a') auf den Holzhalterungen (7a) befestigt werden, die vertikal in der Rille (5) befestigt werden.

16. Ein Grillset aus Naturmaterialien gemäß Anspruch 1 bis 15, **dadurch gekennzeichnet, dass** die Holzstäbe (7b) ein Gitter (8) über dem entzündlichen Material bilden.

## Revendications

1. Ensemble de grill fabrigué à partir de matériaux naturels, comprenant un cadre en bois avec des trous de ventilation, ayant une cavité pour le matériau d'allumage, un dispositif pour maintenir le produit à griller au-dessus du matériau d'allumage, un matériau d'allumage et un moyen d'allumage, dans lequel:
- une cavité (3) a été découpée de manière substantielle dans une surface (2) du cadre en bois (1), avec des trous de ventilation (4) sur les parois latérales (3a) et/ou la paroi d'extrémité (3b) ainsi que des rainures (5) et des trous (6) pour les dispositifs de maintien (7) du produit à griller sur les côtés de la surface (2) qui ne sont pas touchés par la cavité (3) découpée dans le cadre (1);
- les dispositifs de maintien (7) du produit à griller sur le matériau d'allumage (8) sont des supports en bois (7a) avec des fentes (7a') et des bâtonnets en bois (7b);
- le matériau d'allumage (8) est un matériau brûlant à basse température;
- le moyen d'allumage (9) est un matériau naturel;
- la cavité (3) et/ou la surface (2) sur le cadre en bois sont de préférence revêtues d'un agent protecteur naturel.

2. Ensemble de grill fabrigué à partir de matériaux naturels selon la revendication 1, **caractérisé en ce qu'**une partie de la base (3c) de la cavité (3) est concave.

3. Ensemble de grill fabrigué à partir de matériaux naturels selon la revendication 1, **caractérisé en ce qu'**une partie de la base (3c) de la cavité (3) est un plat.

4. Ensemble de grill fabrigué à partir de matériaux naturels selon les revendications 1 à 3, **caractérisé en ce que** pour protéger le cadre utilisé pour griller par la combustion/la chaleur, la cavité (3) et/ou la surface (2) ont été revêtues d'un agent protecteur naturel.

5. Ensemble de grill fabrigué à partir de matériaux naturels selon la revendication 4, **caractérisé en ce que** l'agent protecteur naturel est l'argile.

6. Ensemble de grill fabrigué à partir de matériaux naturels selon la revendication 4, **caractérisé en ce que** l'agent protecteur naturel est l'eau salée.

7. Ensemble de grill fabrigué à partir de matériaux naturels selon les revendications 1 à 6, **caractérisé en ce que** le matériau d'allumage (8) est une briquette de charbon de bois.

8. Ensemble de grill fabrigué à partir de matériaux naturels selon les revendications 1 à 6, **caractérisé en ce que** le matériau d'allumage (8) est des copeaux de bois traités thermiquement.

9. Ensemble de grill fabrigué à partir de matériaux naturels selon les revendications 1 à 8, **caractérisé en ce que** les supports en bois (7a) sont des plaques rectangulaires, avec des fentes (7a') pratiquées le long d'au moins un de ses côtés les plus longs.

10. Ensemble de grill fabrigué à partir de matériaux naturels selon les revendications 1 à 9, **caractérisé en ce que** l'ensemble comprend au moins deux supports en bois (7a) et **en ce qu'**ils doivent être montés dans les rainures (5) sur la surface (2) du cadre en bois (1) pendant l'utilisation.

11. Ensemble de grill fabrigué à partir de matériaux naturels selon la revendication 10, **caractérisé en ce que** les supports en bois (7a) ont été montés horizontalement dans les rainures (5) pendant l'utilisation.

12. Ensemble de grill fabrigué à partir de matériaux naturels selon la revendication 10, **caractérisé en ce que** les supports en bois (7a) ont été montés verticalement dans les rainures (5) pendant l'utilisation.

13. Ensemble de grill fabrigué à partir de matériaux naturels selon les revendications 1 à 12, **caractérisé en ce que** les bâtonnets en bois (7b) sont montés à un angle d'environ 45 degrés dans les trous (6) sur les côtés de la surface (2) du cadre en bois (1) pendant l'utilisation.

14. Ensemble de grill fabrigué à partir de matériaux naturels selon les revendications 1 à 13, **caractérisé en ce que** les bâtonnets en bois (7b) sont montés dans les fentes (7a') des supports en bois (7a) qui sont montés horizontalement dans la rainure (5).

15. Ensemble de grill fabrigué à partir de matériaux naturels selon les revendications 1 à 14, **caractérisé en ce que** les bâtonnets en bois (7b) sont montés dans les fentes (7a') des supports en bois (7a) qui sont montés verticalement dans la rainure (5).

16. Ensemble de grill fabrigué à partir de matériaux naturels selon les revendications 1 à 15, **caractérisé en ce que** les bâtonnets en bois (7b) forment une grille (8) au-dessus du matériau d'allumage.
